# EUROPÄISCHE PATENTSCHRIFT

(11) **EP 1 331 302 B1**
(45) Veröffentlichungstag und Bekanntmachung des Hinweises auf die Patenterteilung: **19.10.2005**
(21) Anmeldenummer: 02001879.2
(22) Anmeldetag: 28.01.2002
(51) Int. Cl.: D06P 1/52, D06P 1/673, D06P 1/655, D06P 1/653, D06M 15/285, D06M 11/13, D06M 11/155, D06M 11/56, D06M 11/65, D06M 11/71, D06M 13/184, C08L 33/26

(54) **Verwendung einer Zusammensetzung als Faltenverhinderungsmittel**
Use of a composition as anti-crease agent
Utilisation d'une composition comme agent anti-pli

(43) Veröffentlichungstag der Anmeldung: 30.07.2003
(73) Patentinhaber: Dr. Th. Böhme KG Chem. Fabrik GmbH & Co., 82538 Geretsried (DE)
(72) Erfinder: Runge, Andreas Dr., 82515 Wolfratshausen (DE); Höhn, Wolfgang, 82515 Wolfratshausen (DE); Weich, Gerhard, 83671 Benediktbeuern (DE)
(74) Vertreter: Störle, Christian

(56) Entgegenhaltungen:
- EP-A- 0 243 939
- EP-A- 0 506 613
- EP-A- 0 613 976
- EP-A- 0 710 740
- EP-A- 0 784 117
- EP-A- 0 965 680

## Beschreibung

Die Erfindung bezieht sich auf die Verwendung einer Zusammensetzung als Faltenverhinderungsmittel.

In der Stück- und Garmentfärberei auf Haspelkufen, Düsen- (sog. Jet-) Färbemaschinen des aerodynamischen sowie des konventionellen voll- bis teilgefluteten Lang- und Rundspeichertyps, Overflowfärbeaggregaten, Paddel- und Trommelfärbemaschinen wird der Textilveredler häufig mit der Problematik von Lauffalten und Scheuerstellen konfrontiert.

Bedingt durch den zwangsläufig nicht immer optimalen Warentransport in der Maschine kann eine Lauffaltenbildung auftreten, die durch das Gewicht der darüberliegenden Ware zu Morphologieveränderungen in der Faser führen kann. Nach dem Färben treten diese durch Unegalitäten in Erscheinung.

Darüberhinaus sind viele Textilien während des Warenlaufes auf den benannten Maschinentypen sehr empfindlich gegenüber Scheuerbeanspruchung "Ware gegen Ware" sowie "Ware gegen Maschine". Ohne entsprechende Gegenmaßnahme selbst bei ansonsten sachgemäßer Arbeitsweise kann dies zu irreversiblen Abriebstellen auf den Textilien führen. Das Verfilzen von Wollstückware im Ausziehverfahren ist hierbei ein Sonderfall.

Diesen Problemen, die durch Entwicklung moderner Fasertypen wie Lyocell, Microfasem und durch die Renaissance von Elastan-Mischungen in jüngster Zeit eher noch größer geworden sind, begegnet man durch den Zusatz von Lauffaltenverhinderungsmitteln/Gleitmitteln zur Flotte, die weichmachende bzw. gleitfördernde Additive enthalten. Zur Anwendung kommen z.B. Emulsionen sulfonierter Fette, Alkylester und Lecithin sowie spezielle Polymerdispersionen bzw. -lösungen, insbesondere auf der Basis von Polyethylen, ethoxiliertem Polyamid und Polyacrylamid.

Eine Übersicht über gängige Produkttypen und Handelsmarken ist im Textilhilfsmittelkatalog 2000, S. 88-93, Deutscher Fachverlag GmbH, zu finden. Dabei sind einige Faltenverhinderungsmittel relativ substratspezifisch und andere relativ faserneutral. Darüberhinaus zeigen einige Faltenverhinderungsmittel Sekundäreffekte, die aber wiederum deren Universalität einschränken.

Aus der EP 0 613 976 A1 werden Acrylamid-Homo- oder -Copolymere in einer Menge von < 0,04 g pro Liter Färbeflotte als Faltenverhinderungsmittel in Ausziehfärbeverfahren beschrieben. Die Polymere können gemäß der Lehre dieser Offenlegungsschrift in Form einer wäßrigen Zubereitung vorliegen.

Bei solchen Flüssigzubereitungen ist allerdings schon bei geringen Polymer-Konzentrationen eine unerwünscht hohe Viskosität und somit eine erhebliche Beeinträchtigung der Kaltwasserlöslichkeit zu beobachten. Dies wirkt sich wiederum nachteilig auf die Dosierbarkeit der Produkte, insbesondere bei automatischen Dosiersystemen, aus. Solche automatischen Dosiersysteme, insbesondere die sogenannten "Einrohrsysteme", werden aber heutzutage mehr und mehr verwendet. Deshalb nehmen die Anforderungen an die Niedrigviskosität und Kaltwasserlöslichkeit bei den Faltenverhinderungsmitteln ganz erheblich zu. Zusätzlich tritt beim Zugeben derartiger wäßriger Formulierungen aus Acrylamid-Homo- oder Copolymeren zur Flotte ein Geleffekt ein: Das Polymer setzt sich in Form eines Gels auf dem Boden ab und kann nur durch intensives Rühren und/oder Erwärmen in Lösung gebracht werden.

Der vorliegenden Erfindung liegt somit die Aufgabe zugrunde, eine Zusammensetzung zur Verwendung als Faltenverhinderungsmittel bereitzustellen, das nicht die vorstehend beschriebenen Nachteile aufweist.

Erfindungsgemäß wird dies erreicht durch die Verwendung einer Zusammensetzung in Form einer wäßrigen Zubereitung, umfassend
(a) 0,01 Gew.% bis 4 Gew.%, bezogen auf die Zusammensetzung, Acrylamid-Homo- oder -Copolymer und
(b) 1 Gew.% bis 25 Gew.%, bezogen auf die Zusammensetzung, Salz ausgewählt unter Alkali-, Erdalkali- oder Ammoniumhalogeniden, Alkali-, Erdalkali- oder Ammoniumnitraten, Alkali-, Erdalkali- oder Ammoniumphosphaten, Alkali-, Erdalkali- oder Ammoniumsalze organischer Mono- oder Dicarbonsäuren mit 1 bis 6 Kohlenstoff-Atomen, Erdalkali- oder Ammoniumsulfaten, Lithium- oder Kaliumsulfaten
als Faltenverhinderungsmittel zur Zugabe zur Flotte in diskontinuierlichen Stückveredelungsprozessen.

Neben den vorgenannten Komponenten kann die erfindungsgemäß verwendete Zusammensetzung noch andere Komponenten enthalten, beispielsweise ein Bakterizid, z.B. in einer Menge von etwa 0,3 Gew.%, bezogen auf die erfindungsgemäß verwendete Zusammensetzung, und/oder Harnstoff, z.B. in einer Menge von 0,5 bis 5 Gew.%, bezogen auf die erfindungsgemäß verwendete Zusammensetzung Durch die Zugabe von Harnstoff, vor allem in vorgenannten Mengen konnte die Viskosität der erfindungsgemäß verwendeten Zusammensetzung vorteilhafterweise weiter emiedrigt werden. Der Rest der erfindungsgemäß verwendeten Zusammensetzung ist Wasser, so daß es sich bei der erfindungsgemäß verwendeten Zusammensetzung um eine wäßrige Zubereitung handelt.

Es wurde nun überraschenderweise gefunden, daß die Viskosität einer vorgenannten Acrylamid-Homo- oder -Copolymer-Lösung durch den Zusatz der ebenfalls vorgenannten Salze deutlich erniedrigt werden kann. Dadurch werden besonders gute Lösungseigenschaften, vor allem eine gute Kaltwasserlöslichkeit, erreicht, und der vorstehend angesprochene Geleffekt wird vermieden. Die erfindungsgemäß verwendeten Zusammensetzungen können deshalb sehr gut dosiert werden und sind somit insbesondere für den Einsatz in automatischen Dosiersystemen, vor allem den sogenannten "Einrohrsystemen", geeignet.

Des weiteren ist die erfindungsgemäß verwendete Zusammensetzung hinsichtlich ihrer Eigenschaft als Faltenverhinderungsmittel sehr wirksam, d.h. die Ausbildung von Falten wird sehr effizient verhindert. Ferner ist die erfindungsgemäß verwendete Zusammensetzung als Faltenverhinderungsmittel universell einsetzbar, d.h. sie kann in sämtlichen diskontinuierlichen Vorbehandlungs-, Färbe- und Nachbehandlungsschritten bei der Strangveredelung von Stückwaren aus allen Faserarten verwendet werden.

Der Einsatz der Zusammensetzung beeinträchtigt überraschenderweise weiterhin weder den Veredelungsprozeß als solchen, d.h. schäumende oder farbtonbeeinflussende Wirkungen werden beispielsweise nicht festgestellt, noch das Eigenschaftsprofil des fertigen Textils, insbesondere hinsichtlich Echtheit und Warengriff. Unerwünschte Nebenwirkungen der erfindungsgemäß verwendeten Zusammensetzung sind also nicht bekannt.

Bei den in der erfindungsgemäß verwendeten Zusammensetzung vorliegenden Alkalisalzen handelt es sich insbesondere um Lithium-, Natrium-, und Kaliumsalze. Beispiele der Erdalkali-Kationen, die in der erfindungsgemäß verwendeten Zusammensetzung vorliegen können, sind Magnesium- und Calcium-Kationen. Vertreter der Halogenid-Anionen sind Fluorid, Chlorid, Bromid und lodid.

Unter dem Ausdruck "Phosphat" werden Anionen jeglicher Art verstanden, die von der Phosphorsäure abgeleitet sind. Insbesondere handelt es sich bei Phosphaten um die Anionen PO₄³⁻, HPO₄²⁻ und H₂PO₄⁻.

Der Begriff "Sulfat" im Sinn der vorliegenden Erfindung bezeichnet Anionen, die von der Schwefelsäure abgeleitet sind, insbesondere SO₄²⁻ und HSO₄⁻.

Wie vorstehend beschrieben, kann das Anion in der erfindungsgemäß verwendeten Zusammensetzung von einer Mono- oder Dicarbonsäure mit 1 bis 5 Kohlenstoff-Atomen abgeleitet sein. Stammt das Anion von einer Dicarbonsäure, kann es als Anion mit einer oder mit zwei negativen Ladungen vorliegen. Beispiele vorgenannter organischer Säuren sind Ameisensäure, Essigsäure und Oxalsäure.

In einer bevorzugten Ausführungsform der erfindungsgemäß verwendeten Zusammensetzung handelt es sich bei den Salzen um Natriumchlorid, Kaliumchlorid, Ammoniumsulfat, Ammoniumchlorid oder Natriumacetat. Diese Salze stehen besonders leicht zur Verfügung. Ferner können damit in einfacher Weise besonders günstige Viskositäten erhalten werden.

In einer weiteren bevorzugten Ausführungsform der erfindungsgemäß verwendeten Zusammensetzung liegt das Salz in einer Menge von 2 Gew.% bis 10 Gew.%, bezogen auf die Zusammensetzung, vor. Durch diese Mengen werden in günstiger Weise besonders vorteilhafte Viskositäten erhalten.

Die in der erfindungsgemäß verwendeten Zusammensetzung vorliegenden Acrylamid-Homo- oder - Copolymere sind an sich bekannt und zum Teil in Pulverform kommerziell erhältlich. Ferner können sie nach bekannten Verfahren hergestellt werden. Vorzugsweise ist das Polymer ein Copolymer aus 40 Gew.% bis 70 Gew.% Acrylamid und 30 Gew.% bis 60 Gew.% Acrylsäure, insbesondere ein Copolymer aus etwa 50 Gew.% Acrylamid und etwa 50 Gew.% Acrylsäure, jeweils bezogen auf das Gewicht der Monomeren. Durch diese bevorzugten Copolymeren wird die Gleitwirkung vorteilhafterweise erheblich verbessert. Ferner wurde überraschenderweise bei Einsatz dieser Polymeren keine Unverträglichkeit mit 1:2 Metallkomplexfarbstoffen, wie sie manchmal beobachtet werden, festgestellt.

In einer bevorzugten Ausführungsform der erfindungsgemäß verwendeten Zusammensetzung weisen die Polymeren ein mittleres Molekulargewicht von 1 Millionen bis 18 Millionen u auf. Solche Polymere sind günstig, da sie zum einen leicht erhältlich sind und zum anderen der erfindungsgemäß verwendeten Zusammensetzung besonders gute Eigenschaften verleihen.

Vorzugsweise liegt das Polymer in der erfindungsgemäß verwendeten Zusammensetzung in einer Menge von 0,04 Gew.% bis 0,5 Gew.%, bezogen auf die Zusammensetzung, vor.

Die erfindungsgemäß verwendete Zusammensetzung kann mehrere, voneinander verschiedene Acrylamid-Homopolymere aufweisen. Es können mehrere, voneinander verschiedene Acrylamid-Copolymere in der Zusammensetzung vorliegen. Es kann auch ein Gemisch von Acrylamid-Homo- und Acrylamid-Copolymer in der Zusammensetzung vorliegen.

In einer anderen bevorzugten Ausführungsform der erfindungsgemäß verwendeten Zusammensetzung enthält sie weiterhin ein Polyalkylenglykol, beispielsweise Polyethylenglykol, Polyproplyenglykol, Polytetramethylenglykol oder ein Gemisch von mindestens zwei dieser Glykole. Das Polyalkylenglykol besitzt insbesondere eine Molmasse von 200 bis 10.000 g/mol. Die Menge des Polyalkylenglykols in der erfindungsgemäß verwendeten Zusammensetzung kann 0,2 Gew.% bis 4 Gew. %, bezogen auf die Zusammensetzung, betragen. Es wurde überraschenderweise gefunden, daß durch die Zugabe solcher Polyalkylenglykole die Gleitwirkung gesteigert werden konnte.

Die erfindungsgemäß verwendeten Zusammensetzungen können in besonders einfacher, schneller und kostengünstiger Weise durch Einbringen der Komponenten in Wasser hergestellt werden.

Die Zusammensetzungen sind erfindungsgemäß bestens zur Faltenverhinderung in diskontinuierlichen Stückveredelungsprozessen geeignet. Wie bereits vorstehend ausgeführt wurde, können die Zusammensetzungen in sämtlichen diskontinuierlichen Vorbehandlungs-, Färbe- und Nachbehandlungsschritten bei der Strangveredelung von Stückwaren aus allen Faserarten erfindungsgemäß verwendet werden. Die erfindungsgemäß verwendete Zusammensetzung wird dabei insbesondere in einer Menge von 0,5 bis 2 g/l der Flotte zugegeben. Einsatzmengen von mehr als 2 g/l ergeben in der Regel keine Verbesserung der Gleitwirkung. Aus den vorgenannten Mengenangaben ergibt sich somit eine Einsatzmenge des Polymers in der Flotte von 0,0005 g/l bis 0,008 g/l.

Bei den Verfahren der diskontinuierlichen Stückveredlung, in denen die Zusammensetzung als Faltenverhinderungsmittel erfindungsgemäß eingesetzt werden kann, handelt es sich um alle Verfahren der Vorbehandlung, Färbung und Ausrüstung von textilen Flächengebilden, insbesondere Maschenware, Gewebe, Vliesstoff, Garment sämtlicher Substrate, durchgeführt auf den eingangs erwähnten Maschinentypen.

Im einzelnen sind dies vor allem die alkalische und saure Extraktion, die oxidative und reduktive Bleiche von Stückware aus Baumwolle und anderen nativen Cellulosfasern und deren Mischungen mit anderen Fasern, die Fibrillierung und Defibrillierung von Stückware aus regenerativen Cellulosefasern, namentlich Lyocell, Cupro und Polynosic, die Färbung und Nachbehandlung von Cel-Stückware und deren Mischung mit anderen Faserklassen mit sämtlichen in Frage kommenden Farbstoffklassen, namentlich Direkt-, Reaktiv-, Küpen-, Schwefel- und Naphtolfarbstoffen, die Vorwäsche und Walke von Wolltuch, die Färbung und Nachbehandlung von Stückware aus Wolle und deren Mischungen mit anderen Fasern mit sämtlichen in Frage kommenden Farbstoffklassen, insbesondere Säure-, Reaktiv-, Chromierungs-, 1:1- und 1:2-Metallkomplexfarbstoffen, die Entbastung, Färbung und Nachbehandlung von Geweben aus Maulbeer- und Tussahseide, die Färbung erfolgt hierbei mit Säure-, Reaktiv- und 1:2-Metallkomplexfarbstoffen, die Vorwäsche und Bleiche von Stückware aus PA und deren Mischungen mit anderen Fasern, die Färbung und Nachbehandlung von PA-Stückware und deren Mischungen mit Dispersions-, Säure-, Reaktiv-, 1:1- und 1:2-Metallkomplexfarbstoffen, die Vorwäsche, Alkalisierung, Dispersionsfärbung und Nachreinigung von Stückware aus 21/2 und Triacetatfasem und deren Mischungen mit anderen Fasern, die Vorwäsche, Vorbleiche, Alkalisierung, Dispersionsfärbung und Nachreinigung von Stückware aus PES und deren Mischungen mit anderen Fasern, die Vorwäsche und Färbung von PAN-Stückware und deren Mischungen mit anderen Fasern, die Vorbehandlung, Färbung und Nachbehandlung von Stückware anderer synthetischer Fasern, wie Splitting/Matrixfasern, Polybutylenterephthalat, Polytrimethylenterephthalat, PVC, PP, Aramidfasern.

Die für vorgenannte Verfahren geeigneten Chemikalien, Textilhilfmittel, Farbstoffe und Verfahrensparameter sind dem Fachmann bekannt und bedürfen bei erfindungsgemäßer Verwendung der Zusammensetzung keiner Anderung gegenüber konventioneller Arbeitsweise.

Die Erfindung wird anhand der folgenden Beispiele näher erläutert, ohne sie jedoch darauf einzuschränken.

### Herstellungsbeispiele:

### Beispiel 1:

In 100g Wasser werden nacheinander 2,7g Natriumchlorid, 4g Harnstoff und 0,4g Polymer (aus etwa 50 Gew.% Acrylamid und etwa 50 Gew.% Acrylsäure, z.B. Handelsprodukt Prästol® 2350) aufgelöst. Man erhält eine wasserklare, dünnflüssige Zubereitung mit einer Viskosität von etwas mehr als 8 mPas.

### Beispiel 2:

In 100g Wasser werden nacheinander 2,7g Ammoniumsulfat, 4g Harnstoff und 0,4g Polymer (vgl. Bsp. 1) aufgelöst. Man erhält eine wasserklare, dünnflüssige Zubereitung mit einer etwas geringeren Viskosität als etwa 8 mPas.

### Beispiel 3:

In 100g Wasser werden nacheinander 2g Natriumchlorid, 3g Harnstoff, 1g Polyethylenglykol 6000 und 0,3g Polymer (vgl. Bsp. 1) aufgelöst. Man erhält eine leicht trübe, flüssige Zubereitung, mit sehr guten schmierenden Eigenschaften.

### Beispiel 4:

Gemäß Beispiel 1 werden erfindungsgemäß verwendete Zubereitungen hergestellt aus 0,4 % Polymer Prästol® 2350 und 6 % Ammoniumchlorid (40 mPas), 6 % Ammoniumsulfat (55 mPas), 6 % Natriumchlorid (50 mPas), 6 % Kaliumchlorid (50 mPas) und 6 % Natriumacetat (80 mPas).

### Anwendungsbeispiele:

### Beispiel 6:

100 Teile einer stuhlrohen, ungesengten Lyocellmaschenware in Schlauchform werden in eine aerodynamischen Stückfärbemaschine (Fabrikat Then Airflow AFS) mit einer auf 50 °C vorgewärmten Flotte, die 3,0 Teile des Produktes gemäß Beispiel 1, 1,0 Teile eines handelsüblichen schaumarmen Wasch-/Emulgiermittels (bestehend aus Fettalkoholethoxilat und nachrangig Polydimethylsiloxan) in 500 Teilen Wasser mit einer Härte von 3 °dH enthält, eingefahren.

Nach 10 min Behandlungszeit bei 50 °C werden 2,0 Teile calciniertes Soda zugefügt und die Flotte wird nach weiteren 5 min mit 2,5 °C/ min auf 98 °C aufgeheizt. Dort verweilt man 60 min, kühlt mit 2 °C/min auf 60 °C ab, läßt bei 60 °C ab und spült warm nach.

Man erhält durch diese Behandlung eine Lyocellmaschenware, die auch ohne vorgängiges Sengen gleichmäßig, faltenfrei ohne Scheuerstellen und dennoch maximal primärfibrilliert ist.

Dies stellt die Grundvoraussetzung für optimale Folgeprozesse (enzymatische Defibrillierung, Färbung, Fibrillierschutzausrüstung, Tumblen) und somit für einen einwandfreien Warenendausfall dieses hochsensiblen Artikels dar.

Die genannten Folgeprozesse sind dem Fachmann im Detail bekannt und bedürfen hier keiner näheren Erläuterung. Allerdings sind auch in den Prozeßstufen Defibrillierung und Färbung erneute Anwendungen von jeweils 1,0 Teilen des Produktes gemäß Beispiel 1 vorteilig.

Verwendet man anstelle des Produktes gemäß Beispiel 1
(a) 3,0 Teile des Produktes gemäß Beispiel 2
(b) 4,0 Teile des Produktes gemäß Beipiel 3
erhält man vergleichbar gute Resultate.

### Beispiel 7:

100 Teile einer stuhlrohen, unfixierten Rundstrickware aus Baumwolle/Elastan (Typ Polyether), Verhältnis 96%/4%, werden in Schlauchform in einem teilgefluteten Langspeicherjet (Typ: Soft TRD - Thies) mit einer Flotte, die 2,0 Teile des Produktes gemäß Beispiel 1, 2,5 Teile eines Bleichereikompounds (in erster Linie bestehend aus Phosphonsäurederivaten und Fettalkoholethoxilaten), 1 Teil eines üblichen Antioxidans (Iminoharnstoff-Derivat), 5,0 Teile einer 33 gew.%igen Natronlauge und 4,0 Teile einer 35 gew.%igen Wasserstoffperoxidlösung in 1300 Teilen Wasser mit einer Härte von 4,2 °dH enthält, 10 min bei 30 °C behandelt.

Daraufhin wird die Flotte mit 2 °C/min auf 98 °C aufgeheitzt und die Ware dort 45 min lang (vor)gebleicht. Danach wird mit 1 °C/min auf 70 °C abgekühlt und abgelassen.

Nach warmem Zwischenspülprozeß, Neutralisation und enzymatischer Peroxideliminierung wird ein Reaktivfärbeprozeß ausgeführt.

Diese Folgeprozesse sind dem Fachmann bekannt und bedürfen keiner näheren Erläuterung.

Sinnvollerweise sind dem Reaktivfärbebad erneut 1,0 Teile des Produktes gemäß Beispiel 1 zuzufügen.

Durch diese Behandlung erhält man optimal und faltenfrei vorgebleichte und letztendlich gefärbte Ware trotz unterlassener thermischer Vorfixierung. Die Elastizität des Elastananteils ist nicht signifikant beeinträchtigt.

Verwendet man anstelle des Produktes gemäß Beispiel 1
(a) 2,0 Teile des Produktes gemäß Beispiel 2
(b) 2,7 Teile des Produktes gemäß Beispiel 3
erhält man vergleichbar gute Resultate.

### Beispiel 8:

100 Teile einer alkalisch abgekochten Baumwollkulierwirkware werden in einer Haspelkufe (Fabrikat Then) mit einer Flotte, die 1,5 Teile des Produktes gemäß Beispiel 1, 80,0 Teile Natriumsulfat, calc und 4,0 Teile Natriumcarbonat, calc. in 2000 Teilen Wasser mit einer Härte von 0,3 °dH enthält, 10 min bei 25 °C behandelt.

Danach werden 0,52 Teile einer grauen Reaktivfarbstofftrichromie, bestehend aus
35 % Handelsfarbstoff Levafix Gelb E-3RL
20 % Handelsfarbstoff Levafix Brillant Rot E-4BA
45 % Handelsfarbstoff Levafix Brillant Blau E-BRA
zugegeben und nach weiteren 5 min Behandlung bei 25 °C innerhalb von 35 min auf 50 °C aufgeheizt. Dort verweilt man 15 min und dosiert danach in drei Portionen in je 5 minütigem Abstand 0,26, 0,78 und 1,56 Teile 33 gew. %ige Natronlauge zu.

Danach werden noch 45 min bei 50 °C verweilt und die Flotte abgelassen.

Die coloristischen Folgeprozesse des Spülens und Seifens sind dem Fachmann bekannt und bedürfen keiner näheren Erläuterung.

Durch diese Behandlung erhält man optimal egal sowie falten- und scheuerfrei gefärbte Maschenware.

Verwendet man anstelle des Produktes gemäß Beispiel 1
(a) 1,5 Teile des Produktes gemäß Beispiel 2
(b) 2,0 Teile des Produktes gemäß Beispiel 3
erhält man vergleichbar gute Resultate.

### Beispiel 9 :

100 Teile eines stuhlrohen Wollgewebes mit Tuchbindung werden in einer Walk-Waschmaschine (Fabrikat Hemmer) mit einer Flotte, die 2,0 Teile des Produktes gemäß Beispiel 1 sowie 3,0 Teile eines spezifischen Wollwaschmittels (basierend auf speziellem Fettsäureamid-Derivat) in 1000 Teilen Wasser mit einer Härte von 5,2 °dH und einem pH-Wert von 6,8 enthält, 40 min bei 40 °C behandelt.

Daraufhin wird abgelassen und intensiv warm bis kalt gespült.

Durch diese Behandlung erhält man optimal gleichmäßige, walkstriemenfreies Lodentuch.

Verwendet man anstelle des Produktes gemäß Beispiel 1
(a) 2,0 Teile des Produktes gemäß Beispiel 2
(b) 2,7 Teile des Produktes gemäß Beipiel 3
erhält man vergleichbar gute Resultate.

### Beispiel 10:

100 Teile eines stuhlrohen, polyestergeschlichteten PES-Gewebes werden in einem Langspeicherjet vollgeflutet, mit einer Flotte, die 2,0 Teile des Produktes gemäß Beispiel 1, 4,0 Teile eines Alkalisierbeschleunigers (Basis: ethoxilierte quartäre Ammonverbindung), 1,0 Teile eines hinreichend alkalistabilen Waschmittels (Basis ethoxilierter Fettalkohol) und 30 Teilen Ätznatron in 1950 Teilen Wasser mit einer Härte von 1,0 °dH enthält, 10 min bei 50 °C behandelt.

Daraufhin wird mit 2 °C/min auf 105 °C aufgeheizt und dort 40 min verweilt. Anschließend wird mit 1 °C/min auf 70 °C abgekühlt, abgelassen, warm und kalt gespült.

Die darauffolgende Dispersionsfärbung ist dem Fachmann bekannt und bedarf hier keiner näheren Erläuterung.

Durch diese Behandlung erhält man trotz unterbliebener Vorfixierung ein optimal gleichmäßig abgeschältes PES-Gewebe mit seidenähnlichem Griff.

Verwendet man anstelle des Produktes gemäß Beispiel 1
(a) 2,0 Teile des Produktes gemäß Beispiel 2
(b) 2,7 Teile des Produktes gemäß Beispiel 3
erhält man vergleichbar gute Resultate.

### Beispiel 11:

100 Teile eines vorgängig kontinuierlich entschlichteten und thermisch vorfixierten PES-Microfasergewebes werden in einem Rundspeicherjet, Typ Softglider (Scholl), mit einer Flotte, die 1,5 Teile des Produktes gemäß Beispiel 1, 1,0 Teile eines schaumarmen PES-Egalisiermittels mit retardierender, migrierender und dispergierender Wirkung (Kombination aus Fettsäurethoxilat, Naphthalinmethansulfonat-Polykondensat, Polydimethylsiloxan nebst nichtionogenen Emulgatoren), 1,0 Teile Natriumacetat und 1,0 Teile 60%ige Essigsäure in 1150 Teilen Wasser mit einer Härte von 2,6 °dH enthält, 10 min bei 50 °C behandelt.

Danach werden 1,3 Teile einer marineblauen Dispersionsfarbstofftrichromie, bestehend aus
25 % Handelsfarbstoff Foron Gelbbraun S-2RL 300 %
7 % Handelsfarbstoff Foron Rot RD-GL
68 % Handelsfarbstoff Foron Dunkelblau RD-2RE 300%
zugegeben und nach weiteren 5 min Behandlung bei 50 °C mit 2 °C/min auf 100 und weiter mit 1,5 °C/min auf 135 °C aufgeheizt. Dort verweilt man 45 min und kühlt dann mit 2 °C/min auf 100 °C und mit 1,5 °C/min auf 65 °C ab, bei dieser Temperatur wird die Flotte abgelassen.

Die PES-mikrofaserspezifische Nachbehandlung ist dem Fachmann bekannt und bedarf keiner näheren Erläuterung.

Durch diese Behandlung erhält man ein optimal egal sowie falten- und scheuerfrei gefärbtes PES-Microfasergewebe.

Verwendet man anstelle des Produktes gemäß Beispiel 1
(a) 1,5 Teile des Produktes gemäß Beispiel 2
(b) 2,0 Teile des Produktes gemäß Beipiel 3
erhält man vergleichbar gute Resultate.

### Beispiel 12:

100 Teile PA (100%)-Feinstrumpfhosen, vorgängig mit Dampf formfixiert aber ungewaschen, werden in einer Trommelfärbemaschine (Fabrikat Colorcombi; Proll und Lohmann) mit einer Flotte, die 1,0 Teile des Produktes gemäß Beispiel 1, 2,0 Teile eines schaumarmen, faseraffinen, streifendeckenden PA-Egalisiermittels (Basis Alkylarylsulfonat, Fettaminethoxilat, Polydimethylsiloxan plus nichtionogene Emulgatoren), 0,5 Teile eines schaumarmen, emulgierenden Waschmittels (Basis Fettalkoholethoxilat, Polydimethylsiloxan plus nichtionogene Emulgatoren), 1,0 Teile Ammonacetat und 0,5 Teile Essigsäure 60 % in 1000 Teilen Wasser mit einer Härte von 5,5°dH enthält, 5 min bei 25 °C behandelt.

Danach werden 2,09 Teile einer schwarzen, binären Säure-1:2-Metallkomplexfarbstoffkombination, bestehend aus
95 % Handelsfarbstoff Telon Schwarz LDN
5 % Handelsfarbstoff Isolan Gelb 4S-GL
zugegeben und nach weiteren 5 min Behandlung bei 25 °C innerhalb mit 1 °C/min auf 98 °C aufgeheizt. Dort verweilt man 45 min und setzt nochmals 0,5 Teile Essigsäure 60% nach und verweilt nochmal 15 min bei 98 °C. Anschließend wird mit 1 °C/min auf 60 °C abgekühlt, abgelassen und warm und kalt gespült.

Der coloristische Folgeprozeß des anionischen Echtheitsverbessem mit einem Syntan ist dem Fachmann bekannt und bedarf keiner weiteren Erläuterung.

Durch diese Behandlung erhält man optimal egal sowie falten, -zieher- und scheuerfrei gefärbte PA-Feinstrümpfe.

Verwendet man anstelle des Produktes gemäß Beispiel 1
(a) 1,0 Teile des Produktes gemäß Beispiel 2
(b) 1,3 Teile des Produktes gemäß Beispiel 3
erhält man vergleichbar gute Resultate.

## Patentansprüche

1. Verwendung einer Zusammensetzung in Form einer wäßrigen Zubereitung umfassend
(a) 0,01 Gew.-% bis 4 Gew.-%, bezogen auf die Zusammensetzung, Acrylamid-Homo- oder -Copolymer und
(b) 1 Gew.-% bis 25 Gew.%, bezogen auf die Zusammensetzung, Salz ausgewählt unter Alkali-, Erdalkali- oder Ammoniumhalogeniden, Alkali-, Erdalkali- oder Ammoniumnitraten, Alkali-, Erdalkali- oder Ammoniumphosphaten, Alkali-, Erdalkali- oder Ammoniumsalzen organischer Mono- oder Dicarbonsäuren mit 1 bis 6 Kohlenstoff-Atomen, Erdalkali- oder Ammoniumsulfaten, Lithium- oder Kaliumsulfaten
als Faltenverhinderungsmittel zur Zugabe zur Flotte in diskontinuierlichen Stückveredelungsprozessen.

2. Verwendung nach Anspruch 1, wobei das Salz Natriumchlorid, Kaliumchlorid, Ammoniumsulfat, Ammoniumchlorid oder Natriumacetat ist.

3. Verwendung nach Anspruch 1 oder 2, wobei das Salz in einer Menge von 2 Gew.% bis 10 Gew.%, bezogen auf die Zusammensetzung, vorliegt.

4. Verwendung nach einem der vorhergehenden Ansprüche, wobei das Polymer ein Copolymer aus 40 Gew.-% bis 70 Gew.-% Acrylamid und 30 Gew.% bis 60 Gew.% Acrylsäure, jeweils bezogen auf die Monomeren, ist.

5. Verwendung nach einem der vorhergehenden Ansprüche, wobei das Polymer ein mittleres Molekulargewicht von 1 Millionen bis 18 Millionen u aufweist.

6. Verwendung nach einem der vorhergehenden Ansprüche, wobei das Polymer in einer Menge von 0,04 Gew.-% bis 0,5 Gew.%, bezogen auf die Zusammensetzung, vorliegt.

7. Verwendung nach einem der vorhergehenden Ansprüche, wobei die Zusammensetzung weiterhin ein Polyalkylenglykol enthält.

## Claims

1. Use of a composition in the form of an aqueous preparation, comprising
(a) 0.01 weight-% to 4 weight-% of an acrylamide-homopolymer or copolymer, based on the composition, and
(b) 1 weight-% to 25 weight-% of a salt, selected from among alkali halides, alkaline earth halides or ammonium halides, alkali nitrates, alkaline earth nitrates or ammonium nitrates, alkali phosphates, alkaline earth phosphates or ammonium phosphates, alkali salts, alkaline earth salts or ammonium salts of organic monocarboxylic or dicarboxylic acids comprising 1 to 6 carbon atoms, alkaline earth sulfates or ammonium sulfates, lithium sulfates or potassium sulfates, based on the composition,
as an anti-crease composition to be added to the fleet in discontinuous piece-finishing processes.

2. Use according to claim 1, wherein the salt is sodium chloride, potassium chloride, ammonium sulfate, ammonium chloride or sodium acetate.

3. Use according to claim 1 or 2, wherein the salt is present in an amount of 2 weight-% to 10 weight-%, based on the composition.

4. Use according to any one of the preceding claims, wherein the polymer is a copolymer of 40 weight-% to 70 weight-percent of acryl amide and 30 weight-% to 60 weight-% of acrylic acid, respectively based on the monomers.

5. Use according to any one of the preceding claims, wherein the polymer has an average molecular weight of 1 million to 18 million u.

6. Use according to any one of the preceding claims, wherein the polymer is present in an amount of 0.04 weight-% to 0.5 weight-%, based on the composition.

7. Use according to any one of the preceding claims, wherein the composition further contains a polyalkylene glycol.

## Revendications

1. Utilisation d'une composition en forme de préparation aqueuse, comprenant
(a) 0,01 % en poids à 4 % en poids, rapportés à la composition, d'homo- ou de copolymères de l'acrylamide et
(b) 1 % en poids à 25 % en poids, rapportés à la composition, de sel choisi parmi les halogénures de métaux alcalins, de métaux alcalino-terreux ou d'ammonium, les nitrates de métaux alcalins, de métaux alcalino-terreux ou d'ammonium, les phosphates de métaux alcalins, de métaux alcalino-terreux ou d'ammonium, ou les sels organiques d'acides mono- ou dicarboxyliques à 1 à 6 atomes de carbone et de métaux alcalins, de métaux alcalino-terreux ou d'ammonium, les sulfates de métaux alcalino-terreux ou d'ammonium, les sulfates de lithium ou de potassium
comme agents anti-pli pour addition dans un bain dans des processus de traitement discontinus.

2. Utilisation selon la revendication 1, pour laquelle le sel est du chlorure de sodium, du chlorure de potassium, du sulfate d'ammonium, du chlorure d'ammonium ou de l'acétate de sodium.

3. Utilisation selon la revendication 1 ou 2, pour laquelle le sel est présent en une quantité de 2 % en poids à 10 % en poids, rapportés à la composition.

4. Utilisation selon l'une des revendications précédentes, pour laquelle le polymère est un copolymère de 40 % en poids à 70 % en poids d'acrylamide et de 30 % en poids à 60 % en poids d'acide acrylique, rapportés respectivement aux monomères.

5. Utilisation selon l'une des revendications précédentes, pour laquelle le polymère présente une masse molaire moyenne de 1 million à 18 millions de u.

6. Utilisation selon l'une des revendications précédentes, pour laquelle le polymère est présent en une quantité de 0,04 % en poids à 0,5 % en poids, rapporté à la composition.

7. Utilisation selon l'une des revendications précédentes, pour laquelle la composition contient en outre un polyalkylèneglycol.
